# EUROPÄISCHE PATENTSCHRIFT

(11) **EP 2 216 118 B1**
(45) Veröffentlichungstag und Bekanntmachung des Hinweises auf die Patenterteilung: **03.02.2016**
(21) Anmeldenummer: 10153084.8
(22) Anmeldetag: 09.02.2010
(51) Int. Cl.: B23F 23/00, B23F 5/04, B23F 5/22, B23F 5/24

(54) **Vorrichtung zum abwälzenden Bearbeiten eines in eine Werkzeugmaschine eingespannten Werkstücks und Verfahren zum Fertigen eines eine Verzahnung aufweisenden Werkstücks**
Device for rolling off a workpiece clamped in a tool machine and method for producing a workpiece comprising cogged tools
Dispositif de traitement par rejet d'une pièce usinée encastrée dans une machine-outil et procédé de fabrication d'une pièce usine comportant une dentelure

(30) Priorität: 09.02.2009 DE 102009008122
(43) Veröffentlichungstag der Anmeldung: 11.08.2010
(73) Patentinhaber: DECKEL MAHO Pfronten GmbH, 87459 Pfronten (DE)
(72) Erfinder: Neumaier, Josef, 87459 Pfronten (DE); Lochbihler, Thomas, 6682 Vils (AT); Hansen, Uwe-Carsten, 87637 Eisenberg (DE)
(74) Vertreter: MERH-IP Matias Erny Reichl Hoffmann Patentanwälte PartG mbB

(56) Entgegenhaltungen:
- WO-A2-93/10932
- ANONYMOUS: "Gear Milling on Non-Gear Dedicated Machinery", GEAR TECHNOLOGY, RANDALL PUBLISHING CO. ELK GROVE, ILLINOIS, US, Bd. 26, 1. Juli 2009 (2009-07-01), XP007919979, ISSN: 0743-6858

## Beschreibung

Die vorliegende Erfindung betrifft eine Vorrichtung zum Bearbeiten eines in eine Werkzeugmaschine eingespannten Werkstücks mit einem Wälzwerkzeug zum Abtragen von Material des Werkstücks zum Formen eines wälzbaren Profils, insbesondere z.B. einer Verzahnung, auf dem Werkstück durch Wälzfräsen oder Wälzschleifen, und einem Wälzwerkzeug-Aufnahmemittel zum Aufnehmen des Wälzwerkzeugs. Des Weiteren betrifft die vorliegende Erfindung eine Werkzeugmaschine, insbesondere eine Fräs-/Drehwerkzeugmaschine, Fräs-/Bohrwerkzeugmaschine, Dreh-/Fräswerkzeugmaschine oder auch ein Universal-bearbeitungszentrum, die mit einer derartigen erfindungsgemäßen Vorrichtung ausgerüstet ist.

Des Weiteren betrifft die vorliegende Erfindung weiterhin ein Verfahren zum Fertigen eines ein wälzbares Profil, insbesondere z.B. eine Verzahnung, aufweisenden Werkstücks durch Wälzfräsen und/oder Wälzschleifen, insbesondere durch eine Vorrichtung zum Bearbeiten eines in eine Werkzeugmaschine eingespannten Werkstücks mit einem Wälzwerkzeug zum Abtragen von Material des Werkstücks zum Formen einer Verzahnung auf dem Werkstück durch Wälzfräsen oder Wälzschleifen, und einem Wälzwerkzeug-Aufnahmemittel zum Aufnehmen des Wälzwerkzeugs.

### HINTERGRUND DER ERFINDUNG

Im Stand der Technik ist es bekannt, Zahnräder an speziellen Wälzfräsmaschinen zerspanend zu fertigen, wobei ein Wälzfräswerkzeug zum Abtragen von Material des Werkstücks zum Formen der Verzahnung auf dem Werkstück durch Wälzfräsen in einem Wälzfräswerkzeug-Aufnahmemittel zum Aufnehmen des Wälzfräswerkzeugs aufgenommen ist.

Zum Wälzfräsen der Verzahnung des Werkstücks wird das Wälzfräswerkzeug derart angetrieben, dass es um eine Rotationsachse rotiert, so dass es dazu geeignet ist, Material von dem Werkstück durch Zerspanen, insbesondere Wälzfräsen, von dem Werkstück abzutragen. Hierbei ist aus dem Stand der Technik bekannt, dass die Wälzfräswerkzeuge eine Schneidenform aufweisen, die es ermöglicht, durch Wälzfräsen die Verzahnung des Werkstücks zu formen. Insbesondere ist es dem Stand der Technik bekannt, durch das vorstehend beschriebene Wälzfräsen verschiedene Formen von wälzbare Profile aufweisenden Werkstücken, insbesondere von Zahnrädern, z.B. Stirnzahnräder oder Kegelzahnräder, mit verschiedenen Verzahnungsformen, insbesondere geradverzahnt, schrägverzahnt, bogenverzahnt und spiralverzahnt, zu fertigen. Das Fertigen von wälzbaren Profilen durch Wälzfräsen erfordert insbesondere eine exakte Synchronisierung von Werkzeug- und Werkstückbewegung, um die gewünschte Geometrie des wälzbaren Profils, insbesondere der Verzahnung, fertigen zu können.

Hierbei ist es jedoch ein Problem im Stand der Technik, dass derartige Spezialwerkzeugmaschinen zum Bearbeiten eines Werkstücks zum Formen einer Verzahnung an dem Werkstück durch Wälzfräsen mittels eines Wälzfräswerkzeugs in einem Wälzfräswerkzeug-Aufnahmemittel ausschließlich zum Fertigen der Verzahnung auf dem Werkstück benutzt werden können.

Für gegebenenfalls erforderliche Vorarbeiten bzw. eine Nachbearbeitung des Werkstücks sind folglich weitere, gegebenenfalls kostenintensive Werkzeugmaschinen erforderlich, um Vor-, Zwischen-, Nach- oder Endbearbeitung an dem Werkstück durchführen zu können. Dies erfordert somit die Anschaffung einer Mehrzahl von kostenintensiven Werkzeugmaschinen.

Außerdem treten lange Durchlaufzeiten im Fertigungsprozess eines Werkstücks auf, wenn das Werkstück während der Fertigung an einer Mehrzahl von Werkzeugmaschinen aus einer ersten Werkzeugmaschine ausgespannt und in eine weitere, zweite Werkzeugmaschine eingespannt werden muss.

WO 93/10932 A2 betrifft eine spezielle Zahnrad-Wälzfräsmaschine zur Herstellung von Zahnrädern, umfassend: einen Werkstückträger mit Mitteln zum lösbaren Befestigen eines Werkstücks zur Drehung um dessen Rotationsachse bzw. um eine Rotationsachse dieses Werkstücks, einen Wälzfräserkopf, der auf einem linear beweglichen, nicht drehbaren, axialen Support bzw. Schlitten montiert ist, wobei der Wälzfräserkopf relativ zum Werkstück um eine Rotationsachse drehbar ist, die durch den Kopf und das Werkstück verläuft, wobei der Wälzfräserkopf Mittel zum lösbaren Montieren eines Wälzfräswerkzeugs zur Drehung um eine Rotationsachse des Wälzfräswerkzeugs umfasst, wobei die Maschine weiterhin umfasst: Mittel, wodurch das Wälzfräswerkzeug und der Werkstückträger bzw. -schlitten relativ zueinander in einer Richtung entlang einer X-Achse beweglich sind, Mittel, wodurch das Wälzfräswerkzeug und der Werkstückträger relativ zueinander in einer Richtung entlang einer Y-Achse beweglich sind, und Mittel, wodurch das Wälzfräswerkzeug und der Werkstückträger relativ zueinander in einer Richtung entlang einer Z-Achse beweglich sind, wobei die X-, Y-und Z-Achse zueinander senkrecht verlaufen und das Wälzfräswerkzeug und der Werkstückträger im Wesentlichen gleichzeitig entlang der X-, Y- und Z-Achse beweglich sind, wobei die relative Bewegung des Wälzfräswerkzeugs und des Werkstückträgers durch ein numerisches Steuermittel gesteuert wird, wobei die relative Bewegung des Werkstückträgers und des Wälzfräswerkzeugs unter der Steuerung des Steuermittels bewirkt, dass das Wälzfräswerkzeug entlang seiner Achse in Bezug auf das Werkstück ohne Verschiebungsbewegung des Wälzfräswerkzeugs entlang seiner Achse in Bezug auf den Wälzfräserkopf verschoben wird.

### ZUSAMMENFASSUNG DER ERFINDUNG

Eine Aufgabe der vorliegenden Erfindung ist es, eine Vorrichtung zum Bearbeiten eines in eine Werkzeugmaschine eingespannten Werkstücks durch Zerspanen zum Formen eines wälzbaren Profils, insbesondere einer Verzahnung, auf dem Werkstück und ein entsprechendes Verfahren zum Fertigen eines ein wälzbares Profil bzw. eine Verzahnung aufweisenden Werkstücks durch Wälzfräsen oder Wälzschleifen bereitzustellen, wobei die vorstehenden Probleme der aus dem Stand der Technik bekannten Verfahren und Vorrichtungen vermieden werden.

Des Weiteren ist es eine Aufgabe der vorliegenden Erfindung, eine Vorrichtung zum Bearbeiten eines in eine Werkzeugmaschine eingespannten Werkstücks durch Zerspanen und ein entsprechendes Verfahren zum Fertigen eines ein wälzbares Profil bzw. eine Verzahnung aufweisenden Werkstücks bereitzustellen, durch die ein wälzbares Profil bzw. eine Verzahnung auf einem Werkstück flexibler, effizienter und mit reduziertem Fehler, insbesondere betreffend die gewünschte Profilgeometrie bzw. Verzahnungsgeometrie, durchgeführt werden kann, als in den aus dem Stand der Technik bekannten Verfahren oder mit den aus dem Stand der Technik bekannten Vorrichtungen.

Um die vorstehend beschriebenen Aufgaben der vorliegenden Erfindung zu lösen, wird eine Vorrichtung zum Bearbeiten eines in eine Werkzeugmaschine eingespannten Werkstücks nach Anspruch 1, eine Werkzeugmaschine zum Bearbeiten eines in die Werkzeugmaschine eingespannten Werkstücks nach Anspruch 8, und ein Verfahren zum Fertigen eines eine Verzahnung aufweisenden Werkstücks nach Anspruch 13 vorgeschlagen.

Bevorzugte Ausführungsformen und Ausführungsbeispiele sind den abhängigen Ansprüchen beschrieben.

Nach der vorliegenden Erfindung umfasst eine Vorrichtung zum Bearbeiten eines in eine Werkzeugmaschine eingespannten Werkstücks
- ein Wälzwerkzeug zum Abtragen von Material des Werkstücks zum Formen eines wälzbaren Profils, insbesondere einer Verzahnung, auf dem Werkstück durch abwälzende Bearbeitung, insbesondere Wälzfräsen oder Wälzschleifen, und
- ein Wälzwerkzeug-Aufnahmemittel zum Aufnehmen des Wälzwerkzeugs,
wobei die Vorrichtung erfindungsgemäß gekennzeichnet ist durch
□ein Fräskopf-Befestigungsmittel, dass dazu geeignet ist, die Vorrichtung in einem Aufnahmemittel eines Fräskopfes der Werkzeugmaschine zu befestigen,
wobei die Werkzeugmaschine zumindest 5 Achsen umfasst.

Dies hat den Vorteil, dass die Vorrichtung zum Bearbeiten eines in eine Werkzeugmaschine eingespannten Werkstücks zum Formen eines wälzbaren Profils, insbesondere einer Verzahnung, auf dem Werkstück durch abwälzende Bearbeitung neben einem Wälzwerkzeug und eines zum Aufnehmen des Wälzwerkzeugs bereitgestellten Wälzwerkzeug-Aufnahmemittels zusätzlich ein Fräskopf-Befestigungsmittel umfasst, das dazu geeignet ist, die Vorrichtung in einem Aufnahmemittel eines Fräskopfes einer zumindest 5 Achsen umfassende Werkzeugmaschine zu befestigen, insbesondere in der Werkzeugaufnahme einer zumindest 5 Achsen umfassenden Fräs-/Dreh-, Dreh-/Fräs-bzw. Fräs-/Bohr-Werkzeugmaschine bzw. eines zumindest 5 Achsen umfassenden Universal-Bearbeitungszentrums zu befestigen und zu verriegeln.

Somit wird eine vorteilhafte Vorrichtung bereitgestellt, die es ermöglicht, ein Werkstück in einer zumindest 5 Achsen umfassenden Werkzeugmaschine zu bearbeiten, die eine Werkzeugaufnahme für Fräs- und Bohrwerkzeuge aufweist, wobei das wälzbare Profil, insbesondere die Verzahnung, des Werkstücks in der Werkzeugmaschine mittels eines Wälzwerkzeugs der Vorrichtung durch abwälzende Bearbeitung wie z.B. Wälzfräsen oder Wälzschleifen geformt werden kann. Die Vorrichtung weist insbesondere ein Befestigungsmittel auf, mittels dessen die Vorrichtung an der Werkzeugaufnahme der Werkzeugmaschine aufgenommen und verriegelt werden kann.

Dies bietet den Vorteil, dass beim Bearbeiten eines Werkstücks zum Formen eines wälzbaren Profils, insbesondere einer Verzahnung, auf dem Werkstück durch abwälzende Bearbeitung, insbesondere durch Wälzfräsen oder Wälzschleifen, eine flexible Bewegungsfreiheit in der Steuerung des Fräskopfes einer zumindest 5 Achsen umfassenden Werkzeugmaschine genutzt werden kann, um effektiv, effizient und präzise, insbesondere mit reduziertem Fehler, unterschiedlichste Verzahnungsformen auf dem Werkstück zu formen. Insbesondere ist es möglich, partiell bearbeitete Werkstücke mit partiellen wälzbaren Profilen, bzw. partieller Verzahnung, und Werkstücke mit kompletter Verzahnung zu fertigen, wobei insbesondere geradzahlige und ungeradzahlige Zahnungen gefertigt werden können. Insbesondere ist es möglich, an der zumindest 5 Achsen umfassenden Werkzeugmaschine z.B. Kegel- und Stirnräder mit unterschiedlichen Verzahnungsformen durch abwälzende Bearbeitung wie z.B. Wälzfräsen oder Wälzschleifen mittels der erfindungsgemäßen Vorrichtung zu fertigen.

Das Wälzwerkzeug, das in dem Wälzwerkzeug-Aufnahmemittel aufgenommen ist kann z.B. als Wälzfräswerkzeug wie z.B. als zylindrischer Wälzfräser ausgebildet sein. Das Wälzfräswerkzeug kann weiterhin als Scheibenfräser ausgebildet sein oder mehrere Scheibenfräser umfassen. Weiterhin kann das Wälzwerkzeug als Wälzschleifwerkzeug ausgebildet sein, z.B. als Wälzschleifwerkzeug umfassend eine oder mehrere Profilscheiben-Schleifwerkzeuge oder ein oder mehrere Tellerscheiben-Schleifwerkzeuge, die in dem Wälzwerkzeug-Aufnahmemittel aufgenommen sind, oder auch als Wälzschleifschnecke, insbesondere als globoide oder zylindrische Schleifschnecke, die in dem Wälzwerkzeug-Aufnahmemittel aufgenommen ist. Bei der Verwendung von einem oder mehreren Scheibenfräsern bzw. einer oder mehrerer Schleifscheiben als Wälzwerkzeug können die Scheibenfräser bzw. Schleifscheiben die Geometrie der herauszuarbeitenden Verzahnungsform einseitig oder beidseitig aufweisen, um die Verzahnung bzw. das Verzahnungsprofil einseitig bzw. zweiseitig in einem Schritt herauszuarbeiten. Die Scheibenfräser bzw. Schleifscheiben können jedoch auch eine von der Verzahnungsform abweichende Geometrie aufweisen, wobei die Verzahnungsform aufgrund der hohen Bewegungsflexibilität mit den zumindest 5 Achsen durch ein mehrstufiges Abzeilen herausgearbeitet werden kann.

An einer zumindest 5 Achsen umfassenden Werkzeugmaschine ist es hierbei insbesondere vorteilhaft möglich, die Verzahnung auf dem Werkstück in mittiger als auch in außermittiger Einspannung in der Werkzeugmaschine zu fertigen, wobei durch die Steuerung durch die zumindest 5 Achsen eine exakte Synchronisierung zwischen Werkzeug- und Werkstückbewegung bewerkstelligt werden kann, um das wälzbare Profil, insbesondere die Verzahnung, exakt entsprechend der Vorgaben zu formen, unabhängig davon, ob das Werkstück mittig oder außermittig eingespannt ist. Hierfür kann insbesondere zumindest eine Rundachse zum Steuern der Werkzeugbewegung mit zumindest einer Rundachse zum Steuern der Werkstückbewegung und gegebenenfalls mit zumindest einer Steuerung einer Linearachse exakt synchronisiert werden. Durch eine derartige Synchronisierung kann sichergestellt werden, dass die relative Bewegung des Wälzwerkzeugs zu dem eingespannten Werkstück derart gesteuert wird, dass die Verzahnung exakt entsprechend der Vorgaben geformt bzw. ausgebildet werden kann. Weiterhin kann eine außermittige Einspannung des Werkstücks, die sich auf die Bewegung des Werkstücks bei Ansteuerung der das Werkstück bewegenden Rundachse auswirkt, durch entsprechende Ausgleichsbewegungen und entsprechende Synchronisation der anderen Achsen bei der Steuerung des Werkzeugs ausgeglichen werden, so dass die relative Bewegung des Wälzwerkzeugs zu dem eingespannten Werkstück selbst bei außermittiger Einspannung des Werkstücks derart gesteuert wird, dass die Verzahnung, exakt entsprechend der Vorgaben geformt bzw. ausgebildet werden kann. Auch eine schräge Einspannung des Werkstücks mit einer Werkstückachse, die gegenüber der Rundachse eines Rundtisches auf dem das Werkstück eingespannt ist, geneigt ist, kann aufgrund der hohen Flexibilität durch die zumindest 5 Achsen ausgeglichen werden. Eine erneute Einspannung bzw. Korrektur der Einspannung ist nicht erforderlich. Die Einspannsituation kann hierbei mittels Messtastern bzw. mittels einer Messeinrichtung optisch bzw. mechanisch ausgemessen werden, so dass die Steuerung der Achsen entsprechend der tatsächlichen Einspannsituation angepasst werden kann.

Insbesondere ermöglichen die zumindest 5 Achsen der Werkzeugmaschine eine Bewegung um fünf Freiheitsgrade, d.h. vorzugsweise zumindest drei Translations- bzw. Linearfreiheitsgrade und zumindest zwei weitere Rundachs- bzw. Rotationsfreiheitsgrade. Dies hat den Vorteil, dass die Vorrichtung mit dem Wälzwerkzeug über die zumindest drei linearen und zumindest zwei rotatorischen Achsen der Werkzeugmaschine in jede erforderliche Position und Orientierung schnell und exakt in einer relativ zu dem Werkstück steuerbaren Werkzeugposition und Werkzeugorientierung gebracht werden kann, insbesondere bei exakter Synchronisierung der Werkzeug- und Werkstücksteuerung. Aufgrund der fünf Freiheitsgrade ist es somit möglich, die Vorrichtung bzw. das Wälzwerkzeug in fünf Bewegungsfreiheitsgraden an das Werkstück, relativ zu dem Werkstück anzustellen bzw. anzufahren, insbesondere in beliebigen Schrägstellungen relativ zu dem Werkstück. Somit kann die Schrägstellung der Vorrichtung relativ zu dem Werkstück vorteilhaft flexibel entsprechend einem vorgegebenen Winkel für eine zu fertigende Schrägverzahnung eines Stirnrades oder Kegelrades eingestellt werden. Weiterhin kann die schräge Anstellung der Vorrichtung relativ zu dem Werkstück bei der Fertigung eines Kegelrades flexibel an einen vorgegebenen Kegelwinkel des Kegelrades angepasst werden. Somit können aufgrund der flexiblen Anstellung in 5 Freiheitsgraden mittels der zumindest 5 Achsen Kegelräder mit beliebigem Kegelwinkel gefertigt werden. Somit ist die Bearbeitung eines Werkstückes an einer zumindest 5 Achsen umfassenden Werkzeugmaschine zum Fertigen einer Verzahnung auf dem Werkstück mittels der erfindungsgemäßen Vorrichtung durch abwälzende Bearbeitung, wie z.B. Wälzfräsen oder Wälzschleifen, vorteilhaft flexibler als die Bearbeitung an einer konventionellen Wälzfräsmaschine, die maximal drei Linearachsen und lediglich eine Rundachsen umfassen.

Aufgrund der hohen Flexibilität durch die Freiheitsgrade der zumindest 5 Achsen der Werkzeugmaschine kann die Vorrichtung zum Wälzfräsen oder Wälzschleifen bzw. das Wälzwerkzeug der Vorrichtung insbesondere mit beliebigem Winkel bei beliebiger Schrägstellung an das in der Werkzeugmaschine eingespannte Werkstück herangefahren werden. Hierbei ist es gemäß der vorliegenden Erfindung insbesondere vorteilhaft, dass alle zumindest 5 Achsen simultan und zueinander synchronisiert verfahren werden können, um eine relative Bewegung des eingespannten Werkstücks zu dem Wälzwerkzeug bei der abwälzenden Bearbeitung entsprechend einer vorgegebenen zu erreichenden Verzahnungsform zu ermöglichen. Hierbei sind synchronisierte Bewegungen des Wälzwerkzeugs relativ zu dem eingespannten Werkstück möglich, die an konventionellen Wälzfräswerkzeugmaschinen aufgrund einer niedrigeren Anzahl an verfahrbaren Achsen nicht ermöglicht sind. Hierbei kann insbesondere vorteilhaft eine das eingespannte Werkstück drehende Rundachse mit den die Vorrichtung steuernden Achsen synchronisiert werden. Auch die Drehzahl des Wälzwerkzeugs kann mit der Drehzahl der Werkstückrotation synchronisiert werden.

Insbesondere können hierbei aufgrund der Freiheitsgrade durch die 5 AchsenSteuerung der Werkzeugmaschine flexibel und exakt beliebige Verzahnungsformen gefertigt werden, z.B. einschließlich des Herausarbeitens von bogenförmigen oder spiralförmigen Verzahnungen, die herkömmlich, d.h. ohne die Freiheitsgrade der 5 Achsen nicht gefertigt werden können, oder auch des Herausarbeitens von Verzahnungen mit einer Balligkeit der Verzahnung durch Kippen der Vorrichtung, was an herkömmlichen Maschinen ohne die Freiheitsgrade der 5 Achsen ebenfalls nicht möglich ist.

Vorzugsweise ist das Fräskopf-Befestigungsmittel weiterhin dazu geeignet, die Vorrichtung durch Verriegeln in dem Aufnahmemittel des Fräskopfes der Werkzeugmaschine zu befestigen.

Dies bietet den Vorteil, dass die Vorrichtung mittels des Fräskopf-Befestigungsmittels in dem Aufnahmemittel des Fräskopfes der Werkzeugmaschine durch Verriegeln befestigt werden kann, wobei das Verriegeln der Vorrichtung in dem Aufnahmemittel des Fräskopfes vorzugsweise analog zu einem Verriegeln von gängigen Vorrichtungen zum Aufnehmen eines Werkzeugs in dem Aufnahmemittel des Fräskopfes der Werkzeugmaschine durchgeführt werden kann.

Dies ermöglicht es, dass die Vorrichtung insbesondere dazu geeignet ist, analog zu einer gängigen Vorrichtung zum Aufnehmen eines Werkzeugs in dem Aufnahmemittel des Fräskopfes befestigt bzw. verriegelt zu werden. Somit ist es möglich, die Vorrichtung zum Bearbeiten eines in eine Werkzeugmaschine eingespannten Werkstücks durch Zerspanen nach der vorliegenden Erfindung vorteilhaft an einem Fräskopf einer gängigen, zumindest 5 Achsen umfassenden Werkzeugmaschine zu befestigen und zu verriegeln, insbesondere gegebenenfalls vorzugsweise die Vorrichtung automatisch und/oder programmgesteuert einzuwechseln und zu verriegeln.

Vorzugsweise ist das Fräskopf-Befestigungsmittel der erfindungsgemäßen Vorrichtung weiterhin dazu geeignet, die Vorrichtung durch Entriegeln wieder aus der Befestigung in dem Aufnahmemittel des Fräskopfes der Werkzeugmaschine zu lösen, wenn diese durch Verriegeln in dem Aufnahmemittel des Fräskopfes der Werkzeugmaschine befestigt ist.

Dies ermöglicht es, die Vorrichtung aus der Befestigung des Aufnahmemittels des Fräskopfes zu lösen, so dass die Vorrichtung ein- und ausgewechselt werden kann, gegebenenfalls durch Auswechseln mit einer gängigen Vorrichtung zum Aufnehmen eines Werkzeugs einer Werkzeugmaschine oder eines Werkzeugs selbst.

Vorzugsweise umfasst die Vorrichtung nach der vorliegenden Erfindung weiterhin eine Getriebeeinrichtung, die vorzugsweise dazu geeignet ist, das Wälzwerkzeug anzutreiben, indem vorzugsweise eine Rotationsbewegung von einer Arbeitsspindel der Werkzeugmaschine über die Getriebeeinrichtung auf das Wälzwerkzeug übertragen wird, wenn die Vorrichtung in dem Aufnahmemittel des Fräskopfs befestigt ist.

Dies ermöglicht es, das Wälzwerkzeug in dem Wälzwerkzeug-Aufnahmemittel anzutreiben, um durch Wälzfräsen Material von dem Werkstück abtragen zu können. Hierzu ermöglicht es die Getriebeeinrichtung vorzugsweise, den Antrieb durch eine Arbeitsspindel der Werkzeugmaschine zu ermöglichen, indem die Rotationsbewegung von der Arbeitsspindel über die Getriebeeinrichtung auf das Wälzwerkzeug übertragen werden kann, wenn die Vorrichtung in dem Aufnahmemittel des Fräskopfes befestigt ist. Hierzu kann die Getriebeeinrichtung vorzugsweise weiterhin Mittel umfassen, die Teil des Fräskopf-Befestigungsmittels sind oder zumindest mit dem Fräskopf-Befestigungsmittel interagieren, so dass eine Übertragung einer Rotationsbewegung von einer Arbeitsspindel der Werkzeugmaschine möglich ist, sobald das Fräskopf-Befestigungsmittel die Vorrichtung in einem Aufnahmemittel eines Fräskopfes der Werkzeugmaschine befestigt und/oder verriegelt hat.

Dies hat den Vorteil, dass eine Arbeitsspindel, die gegebenenfalls für das Antreiben eines Werkzeugs, insbesondere eines Fräs- oder Bohrwerkzeugs, der Werkzeugmaschine verwendet wird, vorteilhaft ebenfalls zum Antreiben des Wälzwerkzeugs der Vorrichtung zum Bearbeiten eines in die Werkzeugmaschine eingespannten Werkstücks durch Zerspanen verwendet werden kann. Dementsprechend ist es nicht erforderlich, eine weitere Spindel in der Werkzeugmaschine bereitzustellen, oder spezielle Mittel zum Antreiben des Wälzwerkzeugs in der Werkzeugmaschine.

Vorzugsweise umfasst die Getriebeeinrichtung ein Winkelgetriebe oder ist die Getriebeeinrichtung ein Winkelgetriebe.

Dies ermöglicht es, dass die Rotationsbewegung der Arbeitsspindel der Werkzeugmaschine besonders effektiv und räumlich günstig auf das Wälzwerkzeug übertragen werden kann, da es möglich ist, eine erfindungsgemäße Vorrichtung bereitzustellen, bei der eine Rotationsachse des Wälzwerkzeugs im Wesentlichen senkrecht zu einer Spindelachse oder Antriebsachse an dem Fräskopf der Werkzeugmaschine bereitgestellt werden kann.

Alternativ kann die Getriebeeinrichtung in einer einfachen bevorzugten Ausführungsform der vorliegenden Erfindung auch einen Gegenhalter umfassen mit einem Dorn, der eine rotatorische Führung für das Wälzwerkzeug bereitstellt, wobei das Wälzwerkzeug rotatorisch über eine einfache Ausführungsform einer Getriebeeinrichtung durch die Arbeitspindel angetrieben werden kann. Dies hat den Vorteil, dass die Vorteile der vorliegenden Erfindung durch eine einfache Konstruktion in Verbindung mit einem einen Dorn umfassenden Gegenhalter bereitgestellt werden können.

Vorzugsweise ist die Vorrichtung weiterhin dadurch gekennzeichnet, dass die Werkzeugmaschine eine CNC-Werkzeugmaschine ist, die vorzugsweise dazu geeignet ist, das Wälzwerkzeug programmgesteuert simultan in vorzugsweise 5 Bewegungsfreiheitsgraden vorzugsweise relativ zu dem in der Werkzeugmaschine eingespannten Werkstück zu bewegen, wenn die Vorrichtung in dem Aufnahmemittel des Fräskopfes der Werkzeugmaschine befestigt ist.

Dies hat den Vorteil, dass die Bearbeitung des Werkstücks schnell und präzise, programmgesteuert und insbesondere simultan in den vorteilhaften 5 Bewegungsfreiheitsgraden, insbesondere drei Translationsfreiheitsgraden und zwei Rotationsfreiheitsgraden, relativ zu dem Werkstück bewegt werden kann. Somit ist es insbesondere möglich, vorteilhaft komplexe programmgesteuerte Werkzeugbahnen durch das Wälzwerkzeug der erfindungsgemäßen Vorrichtung ausführen zu können. Hierdurch ist eine exakte programmgesteuerte, komplexe Geometrien ermöglichende Bearbeitung an einer zumindest 5 Achsen aufweisenden CNC-Werkzeugmaschine möglich, wobei es die Bearbeitung besonders vorteilhaft zusätzlich ermöglicht, eine Verzahnung durch Wälzfräsen an dem Werkstück zu fertigen.

Des Weiteren ermöglicht es eine derartige CNC-Werkzeugmaschine, vorzugsweise programmgesteuert während der Bearbeitung des Werkstücks eingesetzte Werkzeuge im Fräskopf bzw. in dem Aufnahmemittel des Fräskopfes der Werkzeugmaschine ein- bzw. auszuwechseln, wodurch zusätzlich zu der Fertigung der Verzahnung des Werkstücks durch Wälzfräsen oder Wälzschleifen mittels des Wälzwerkzeugs weitere Vor-, Zwischen-, Nach- und Endbearbeitungen mit weiteren Werkzeugen, gegebenenfalls Standardwerkzeugen, der Werkzeugmaschine vorzugsweise automatisch und/oder programmgesteuert, insbesondere zeiteffizient, vorteilhaft mit geringen Durchlaufzeiten, ausgeführt werden können.

Vorzugsweise ist hierzu die Vorrichtung insbesondere dazu geeignet, zum Befestigen in dem Aufnahmemittel des Fräskopfes automatisch in das Aufnahmemittel des Fräskopfes eingebracht zu werden, wobei gegebenenfalls die flexible Funktionalität einer zumindest 5 Achsen umfassenden Werkzeugmaschine ausgenutzt werden kann, die es ermöglicht, automatisch programmgesteuert Werkzeuge, bzw. Vorrichtungen zum Aufnehmen von Werkzeugen, in dem Aufnahmemittel des Fräskopfes der Werkzeugmaschine ein- und/oder auszuwechseln.

Vorzugsweise ist die erfindungsgemäße Vorrichtung weiterhin dazu geeignet, in einem Magazin bzw. Werkzeug-Magazin der Werkzeugmaschine aufbewahrt zu werden, bis die Vorrichtung in dem Aufnahmemittel des Fräskopfes befestigt wird und/oder nachdem die Vorrichtung aus dem Aufnahmemittel des Fräskopfes gelöst wird.

Dies ermöglicht es, die Vorrichtung während der Bearbeitung eines Werkstücks an einer zumindest 5 Achsen umfassenden Werkzeugmaschine in einem Magazin bzw. Werkzeug-Magazin der Werkzeugmaschine aufzubewahren, wenn die Bearbeitung des Werkstücks momentan durch andere Werkzeuge der Werkzeugmaschine oder mittels anderer Vorrichtungen zum Aufnehmen von Werkzeugen ausgeführt wird.

Vorzugsweise ist das Wälzwerkzeug-Aufnahmemittel der erfindungsgemäßen Vorrichtung weiterhin dazu geeignet, dass ein erstes in dem Wälzwerkzeug-Aufnahmemittel aufgenommenen Wälzwerkzeugs zum Auswechseln mit einem zweiten Wälzwerkzeug automatisch, gegebenenfalls vorzugsweise programmgesteuert, ein- und ausgewechselt werden kann.

Dies hat den Vorteil, dass neben einer gegebenenfalls möglichen Auswechslung der erfindungsgemäßen Vorrichtung in dem Aufnahmemittel des Fräskopfes weiterhin oder stattdessen eine Auswechslung des Wälzwerkzeugs in dem Wälzwerkzeug-Aufnahmemittel der erfindungsgemäßen Vorrichtung ausgeführt werden kann. Dies ermöglicht es, ohne Auswechseln der Vorrichtung in dem Aufnahmemittel des Fräskopfes der Werkzeugmaschine ein erstes Wälzwerkzeug mit einem zweiten Wälzwerkzeug auszuwechseln, wobei das erste Wälzwerkzeug und das zweite Wälzwerkzeug gegebenenfalls unterschiedliche Schneideformen aufweisen, um gegebenenfalls unterschiedliche wälzbare Profilformen bzw. Verzahnungsformen an dem einen oder gegebenenfalls an mehreren Werkstücken zu formen.

Des Weiteren stellt die vorliegende Erfindung eine Werkzeugmaschine zum Bearbeiten eines in die Werkzeugmaschine eingespannten Werkstücks durch Zerspanen bereit, wobei die Werkzeugmaschine zumindest 5 Achsen umfasst, mit:
□einem Fräskopf mit einem Aufnahmemittel zum Aufnehmen von Werkzeugen und/oder zum Aufnehmen von ein Werkzeug umfassenden Werkzeug-Vorrichtungen, und
□einer Arbeitsspindel zum Antreiben eines in dem Aufnahmemittel des Fräskopfes aufgenommenen Werkzeugs,
wobei die Werkzeugmaschine erfindungsgemäß insbesondere dadurch gekennzeichnet ist, dass die Werkzeugmaschine mit einer Vorrichtung zum Bearbeiten eines in eine Werkzeugmaschine eingespannten Werkstücks durch Zerspanen, wie vorstehend beschrieben, ausgerüstet ist.

Vorzugsweise entspricht hierbei die erfindungsgemäße Vorrichtung, mit der Werkzeugmaschine ausgerüstet ist, einer der vorstehend beschriebenen erfindungsgemäßen Vorrichtungen mit vorstehend beschriebenen bevorzugten Merkmalen oder einer Vorrichtung mit einer Kombination der vorstehend beschriebenen bevorzugten Merkmale.

Vorzugsweise ist die erfindungsgemäße Werkzeugmaschine weiterhin dazu geeignet, die vorstehend beschriebene Vorrichtung automatisch an dem Aufnahmemittel des Fräskopfes zu befestigen. Dies ermöglicht es, die erfindungsgemäße Vorrichtung automatisch, gegebenenfalls programmgesteuert, an dem Aufnahmemittel des Fräskopfes zu befestigen, gegebenenfalls dabei auch zu verriegeln und/oder entriegeln, um die erfindungsgemäße Vorrichtung mit einem Werkzeug oder einer Vorrichtung zum Aufnehmen eines Werkzeugs auszuwechseln.

Hierzu ist die Werkzeugmaschine vorzugsweise dazu geeignet, die erfindungsgemäße Vorrichtung automatisch mit einem anderen in dem Aufnahmemittel des Fräskopfes aufgenommenen Werkzeug und/oder mit einer ein Werkzeug umfassenden, in dem Aufnahmemittel des Fräskopfes aufgenommenen Werkzeug-Vorrichtung auszuwechseln bzw. auswechseln zu können. Vorzugsweise ist dies programmgesteuert möglich.

Vorzugsweise umfasst die erfindungsgemäße Werkzeugmaschine weiterhin ein Magazin bzw. Werkzeug-Magazin, dass dazu geeignet ist, eine oder mehrere erfindungsgemäße vorstehend beschriebene Vorrichtung aufzunehmen, bis die Vorrichtung in dem Aufnahmemittel des Fräskopfes befestigt wird, und/oder ein oder mehrere Wälzwerkzeuge aufzunehmen, z.B. Wälzfräswerkzeuge und/oder Wälzschleifwerkzeuge.

Dies hat den Vorteil, dass ein Magazin bzw. Werkzeug-Magazin der Werkzeugmaschine dazu geeignet ist, gegebenenfalls neben gängigen Werkzeugen oder Standardwerkzeugen, wie Bohr- und Fräswerkzeugen, auch ein oder mehrere Wälzfräswerkzeuge und/oder Wälzschleifwerkzeuge für die Verwendung an einer erfindungsgemäßen Vorrichtung und/oder erfindungsgemäße Vorrichtungen aufzunehmen, und diese gegebenenfalls während der Bearbeitung des eingespannten Werkstücks ein- bzw. auszuwechseln, vorzugsweise programmgesteuert.

Vorzugsweise ist die erfindungsgemäße Werkzeugmaschine weiterhin dazu geeignet, automatisch ein erstes Wälzwerkzeug, das in dem Wälzwerkzeug-Aufnahmemittel der erfindungsgemäßen Vorrichtung aufgenommen ist, mit einem zweiten Wälzwerkzeug auszuwechseln.

Dies ermöglicht es, gegebenenfalls neben der Möglichkeit, eine erfindungsgemäße Vorrichtung ein- bzw. auszuwechseln, zusätzlich ein erstes Wälzwerkzeug mit einem zweiten Wälzwerkzeug an der erfindungsgemäßen Vorrichtung ein- bzw. auszuwechseln, wobei das erste und das zweite Wälzwerkzeug vorzugsweise jeweils unterschiedliche Schneideformen zum Fertigen unterschiedlicher Verzahnungen auf dem Werkstück aufweisen. Hierbei können z.B. auch Wälzfräswerkzeuge mit Wälzschleifwerkzeugen ausgewechselt werden.

Schließlich stellt die vorliegende Erfindung weiterhin ein Verfahren zum Fertigen eines eine Verzahnung aufweisenden Werkstücks durch Wälzfräsen bereit, welches insbesondere dadurch gekennzeichnet ist, dass das Werkstück an einer zumindest 5 Achsen umfassenden Werkzeugmaschine zum Formen der Verzahnung des Werkstücks mittels einer der vorstehend erfindungsgemäßen Vorrichtungen bearbeitet wird, gegebenenfalls mit einer Vorrichtung, die eines der oben genannten bevorzugten Merkmale aufweist oder eine Kombination mehrerer der vorstehend beschriebenen bevorzugten Merkmale.

### KURZBESCHREIBUNG DER FIGUREN

Fig. 1 zeigt eine Werkzeugmaschine nach einer Ausführungsform der vorliegenden Erfindung.
Fig. 2 zeigt eine Ausführungsform einer Vorrichtung, insbesondere einer Wälzfräsvorrichtung, nach einem Ausführungsbeispiel der vorliegenden Erfindung.

### DETAILLIERTE BESCHREIBUNG DER FIGUREN UND BEVORZUGTER AUSFÜHRUNGSBEISPIELE DER ERFINDUNG

Im Folgenden wird die vorliegende Erfindung detailliert bezugnehmend auf ein Ausführungsbeispiel einer Werkzeugmaschine nach der vorliegenden Erfindung, insbesondere ausgerüstet mit einer Ausführungsform der erfindungsgemäßen Vorrichtung nach der vorliegenden Erfindung zum Bearbeiten eines in eine Werkzeugmaschine eingespannten Werkstücks durch Zerspanen, anhand beispielhafter Figuren beschrieben und erläutert. Hierbei wird insbesondere auf das Fertigen von eine Verzahnung aufweisenden Werkstücken beschreibend eingegangen. Es sei jedoch darauf hingewiesen, dass die vorliegende Erfindung nicht auf das Formen von Verzahnungen auf Werkstücken beschränkt ist, sondern vielmehr durch die Verwendung eines geeigneten Wälzfräswerkzeugs oder Wälzschleifwerkzeugs bzw. eines Wälzfräswerkzeugs oder Wälzschleifgeometrie mit einer geeigneten Schneidengeometrie bzw. Profilgeometrie auch beliebige wälzbare Profile auf Werkstücken formen kann. Wälzbare Profile umfasst hierbei sogar Profilformen, die auf nach dem Stand der Technik bekannten Wälzfräsmaschinen nicht wälzbar sind, sondern erst durch die flexible Bewegungsfreiheit an einer zumindest 5 Achsen umfassenden Werkzeugmaschine ermöglicht sind, bzw. wälzbar sind.

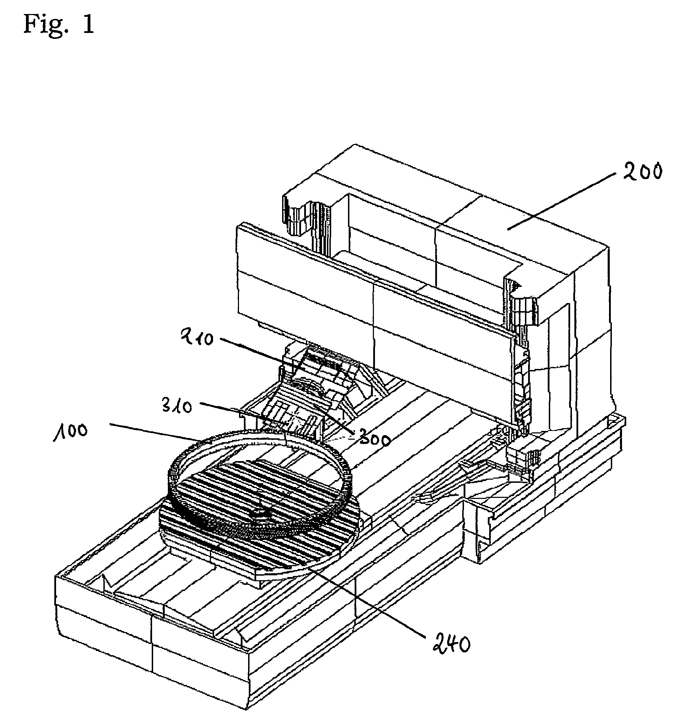

Fig. 1 zeigt eine Werkzeugmaschine 200 mit einem Fräskopf 210 und einem Rundtisch 240, der Mittel umfasst (nicht gezeigt) zum Einspannen eines Werkstücks 100 auf dem Rundtisch 240. Des Weiteren zeigt Fig. 1 ein Ausführungsbeispiel der erfindungsgemäßen Vorrichtung 300 zum Bearbeiten eines in eine Werkzeugmaschine 200 eingespannten Werkstücks 100 durch Zerspanen mit einem Wälzfräswerkzeug 310 zum Abtragen von Material des Werkstücks 100 zum Formen einer Verzahnung auf dem Werkstück durch Wälzfräsen.

In diesem Ausführungsbeispiel ist die dargestellte Werkzeugmaschine 200 eine CNC-gesteuerte Werkzeugmaschine, die 5 Achsen umfasst, insbesondere 3 Linearachsen zum Bewegen des Fräskopfes relativ zu dem eingespannten Werkstück und 2 rotatorische Achsen. Die vorliegende Erfindung ist jedoch nicht auf 5-achsige Werkzeugmaschinen beschränkt, sondern kann des Weiteren für Werkzeugmaschinen benutzt werden, die mehr als 5 Achsen simultan programmgesteuert ansteuern können, z. B. zumindest 3 translatorische Linearachsen und zumindest 3 rotatorische Rundachsen.

Hierbei ermöglichen die zumindest 5 Achsen der Werkzeugmaschine eine Werkzeugführung bzw. Wälzfräswerkzeugführung, in der das Werkzeug bzw. Wälzfräswerkzeug in 5 Bewegungsfreiheitsgraden bewegt werden kann, umfassend die 3 translatorischen Freiheitsgrade und 2 Winkelfreiheitsgrade, insbesondere Rotationsfreiheitsgrade, die eine freie Orientierung der Werkzeugachse ermöglichen.

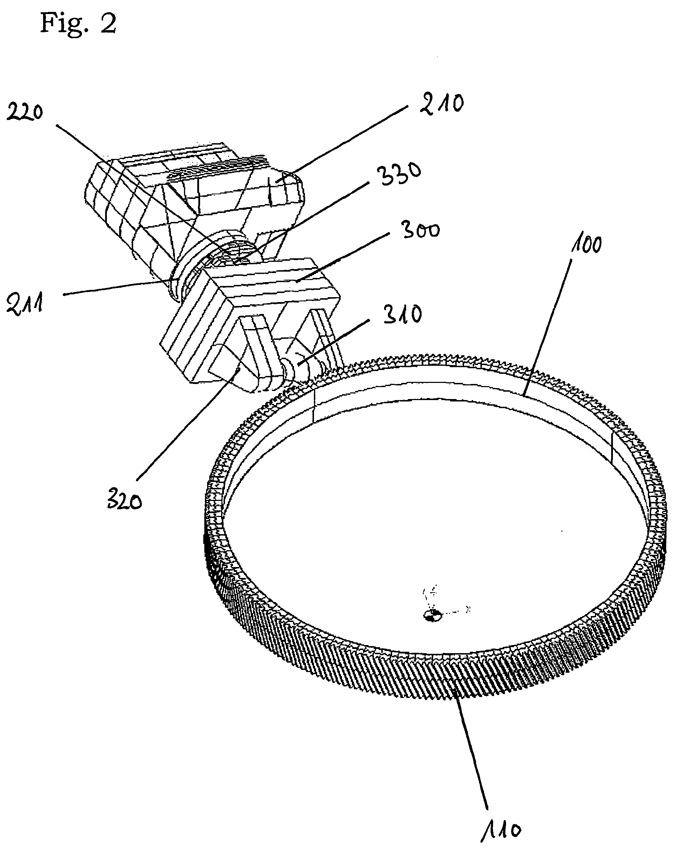

Der Fräskopf 210 der Werkzeugmaschine 200 aus Fig. 1 ist zusammen mit der Vorrichtung 300 vergrößert in Fig. 2 dargestellt. Fig. 2 zeigt den Fräskopf 210 und das in dem Fräskopf 210 integrierte Aufnahmemittel 211, das dazu geeignet ist, Werkzeug aufnehmende Vorrichtungen, insbesondere Fräswerkzeug aufnehmende Vorrichtungen und die erfindungsgemäße Vorrichtung 300, aufzunehmen. Des Weiteren zeigt Fig. 2 ein Ausführungsbeispiel der erfindungsgemäßen Vorrichtung 300, im Folgenden als Wälzfräsvorrichtung 300 bezeichnet, die ein Wälzfräswerkzeug-Aufnahmemittel 320 zum Aufnehmen des Wälzfräswerkzeugs 310 umfasst.

Fig. 2 zeigt weiterhin ein beispielhaftes Fertigteil eines Werkstücks 100 mit einer Verzahnung 110, hier beispielhaft ein Stirnrad mit Schrägverzahnung, wobei die Anstellung der Wälzfräsvorrichtung 300 illustriert ist, mit der durch Führung des Fräskopfes 210 eine Bearbeitung des Werkstücks 100 ermöglicht ist, um die gezeigte Verzahnung 110 zu fertigen. Nicht gezeigt in Fig. 2 ist ein Einspannmittel der Werkzeugmaschine 200 zum Einspannen des Werkstücks 100, insbesondere ein Rundtisch 240, wobei die Einspannung gegebenenfalls ermöglicht, das Werkstück 100 um eine rotatorische Achse zu bewegen.

Insgesamt ermöglichen es die 5 Freiheitsgrade der Werkzeugmaschine, die Wälzfräsvorrichtung 300 mit dem Wälzfräswerkzeug 310 in beliebiger Orientierung und Bahnbewegung relativ zu dem eingespannten Werkstück 100 zu bewegen, um die Verzahnung 110 auf allen Seiten des Werkstücks 100 fertigen zu können.

Nicht gezeigt ist eine in dem Gehäuse der Wälzfräsvorrichtung 300 integrierte Getriebeeinrichtung, die es ermöglicht, eine Rotationsbewegung einer nicht gezeigten Arbeitsspindel der Werkzeugmaschine 200 bei Befestigung der Wälzfräsvorrichtung 300 in dem Aufnahmemittel 211 des Fräskopfes 210 von der Arbeitsspindel 220 zu dem Wälzfräswerkzeug 310 zu übertragen, um das Wälzfräswerkzeug 310 zum Abtragen von Material von dem Werkstück 100 durch Wälzfräsen antreiben zu können.

Hierbei ist in diesem Ausführungsbeispiel der Vorrichtung eine Rotationsachse eines Übertragungsmittels der Getriebeeinrichtung senkrecht zur Rotationsachse des Wälzfräswerkzeugs, so dass in diesem Ausführungsbeispiel die Getriebeeinrichtung ein Winkelgetriebe ist.

Die vorliegende Erfindung ist jedoch nicht auf Winkelgetriebe beschränkt, sondern kann durch unterschiedliche Ausführungsformen einer Getriebeeinrichtung bereitgestellt werden, die dazu geeignet sind, eine Rotationsbewegung einer Arbeitsspindel 220 der Werkzeugmaschine 200 bei Befestigung der Wälzfräsvorrichtung 300 auf das Wälzfräswerkzeug 310 zu übertragen. Zudem ist es möglich, die Rotationsgeschwindigkeit des Wälzfräswerkzeugs 310 zu regeln, gegebenenfalls programmgesteuert, insbesondere gegebenenfalls durch weitere Übersetzungsmittel.

Insbesondere ist es möglich, die Vorteile der vorliegenden Erfindung in einem weiteren Ausführungsbeispiel der vorliegenden Erfindung mit einer Wälzfräsvorrichtung bereitzustellen, die einen Aufbau hat, der einen Gegenhalter mit einem Dorn umfasst, wobei der Dorn ein Wälzfräswerkzeug fixiert und eine Rotation um eine Werkzeugachse des Wälzfräswerkzeugs ermöglicht. Die Vorrichtung umfasst in diesem Fall eine Getriebeeinrichtung, die es ermöglicht, das Wälzwerkzeug durch die Arbeitspindel rotatorisch anzutreiben. Des Weiteren ist die Vorrichtung durch ein Fräskopf-Befestigungsmittel an einem Aufnahmemittel einer Werkzeugmaschine befestigbar.

Ein derartiges Aufnahmemittel, insbesondere auch das in Fig. 2 dargestellte Aufnahmemittel 211 des Fräskopfes 210 ist dazu geeignet, die Wälzfräsvorrichtung 300 bzw. ein Fräskopf-Befestigungsmittel 330 der Wälzfräsvorrichtung 300 in dem Aufnahmemittel 211 an dem Fräskopf 210 durch Verriegeln zu befestigen. Dementsprechend ist das Aufnahmemittel 211 und dementsprechend auch das Fräskopf-Befestigungsmittel 330 dazu geeignet, die Befestigung der Wälzfräsvorrichtung 300 an dem Fräskopf 210 durch Entriegeln zu lösen.

Des Weiteren umfasst die Werkzeugmaschine 200 in diesem Ausführungsbeispiel der vorliegenden Erfindung ein Magazin (nicht gezeigt), das eine Mehrzahl von Fräs- und Bohrwerkzeugen der Werkzeugmaschine umfasst, wobei das Magazin weiterhin Werkzeugvorrichtungen umfasst, die zur Aufnahme eines Fräs- bzw. Bohrwerkzeugs geeignet sind. Das Magazin ist dazu geeignet, des Weiteren eine Wälzfräsvorrichtung 300 oder gegebenenfalls auch mehrere Wälzfräsvorrichtungen 300 aufzubewahren, wenn diese nicht zur Fertigung des Werkstücks 100 benötigt werden.

Bei diesem Ausführungsbeispiel der vorliegenden Erfindung erfolgt die Steuerung der zumindest 5 Achsen umfassenden Werkzeugmaschine über CNC-Steuerdaten, die eine Bewegung eines Werkzeugs, insbesondere des Wälzfräswerkzeugs 310, programmgesteuert entlang vorbestimmter Bahnen anhand der CNC-Steuerdaten steuern, wobei die Werkzeugbahnen eine freie Bewegung in 5 Freiheitsgraden relativ zu dem Werkstück 100 ermöglichen. Die CNC-Steuerdaten steuern somit die programmgesteuerte Bearbeitung des Fertigteils 100 durch gegebenenfalls simultanes Ansteuern aller oder einiger Achsen der Werkzeugmaschine 200.

Die Werkzeugmaschine 200 ist hierbei dazu geeignet, CNC-Steuerdaten auszuführen, die instruieren, dass ein Werkzeug oder eine ein Werkzeug aufnehmende Vorrichtung zum Bearbeiten des Werkstücks 100 während der Bearbeitung ausgewechselt wird, um weitere Arbeitschritte bei der Bearbeitung des Werkstücks 100 auszuführen. Insbesondere ist es somit möglich, an der Werkzeugmaschine 200 ein Werkstück 100 zu bearbeiten, wobei zumindest einer der Arbeitsschritte das Fertigen einer Verzahnung 110 auf dem Werkstück 100 ermöglicht durch Wälzfräsen, indem eine erfindungsgemäße Wälzfräsvorrichtung 300 mit einem Wälzfräswerkzeug 310 über ein Fräskopf-Befestigungsmittel 330 in dem Aufnahmemittel 211 des Fräskopfes 210 automatisch aufgenommen, eingesetzt, und/oder verriegelt wird.

Weiterhin ermöglicht es die Werkzeugmaschine 200, die Wälzfräsvorrichtung 300 mit einer Werkzeug-Vorrichtung zum Aufnehmen eines Werkzeugs, insbesondere eines Fräs- oder Bohrwerkzeugs, auszuwechseln, um eine weitere zerspanende Bahn zum Bearbeiten des Werkstücks 100 abzufahren.

Des Weiteren ermöglicht es die Wälzfräsvorrichtung 300 nach diesem Ausführungsbeispiel der vorliegenden Erfindung, ein erstes Wälzfräswerkzeug 310 mit einem zweiten Wälzfräswerkzeug oder auch einem Wälzschleifwerkzeug auszuwechseln, wobei das zweite Wälzfräswerkzeug gegebenenfalls eine andere Schneideform zum Fertigen einer anderen Verzahnungsform 110 auf dem Werkstück 100 aufweist, wobei das Auswechseln des Wälzfräswerkzeug 310 mit einem zweiten Wälzfräswerkzeug hierbei ohne Auswechseln der Wälzfräsvorrichtung 300 an dem Fräskopf 210 erfolgen kann.

Zusammenfassend stellt die vorliegenden Erfindung eine Werkzeugmaschine 200, eine Wälzfräsvorrichtung 300 und ein Verfahren zum Bearbeiten eines eine Verzahnung 110 aufweisenden Werkstücks 100 an einer zumindest 5 Achsen umfassenden Werkzeugmaschine 200 bereit, die es ermöglicht, eine Verzahnung aufweisende Werkstücke 100, insbesondere Zahnräder, z. B. Stirnzahnräder oder Kegelzahnräder, mit beliebiger Verzahnung, insbesondere Geradverzahnung, Schrägverzahnung, Bogenverzahnung, Evolventenverzahnung, Spiralverzahnung, usw. effizient, präzise und gegebenenfalls programmgesteuert an einer zumindest 5 Achsen umfassenden Werkzeugmaschine 200 ausführen zu können. Des Weiteren sind beliebige wälzbare Profile möglich. Somit ist es insbesondere möglich, Verzahnungsformen herauszuarbeiten, die auf konventionellen Wälzfräsmaschinen, die maximal drei Linearachsen und eine Rundachse umfassen, nicht gefertigt werden können.

Dies ermöglicht besonders vorteilhaft z. B. den Einsatz einer Standard-5-Achs-Universal-Fräs- und Bohrmaschine oder einer anderen zumindest 5 Achsen umfassenden Werkzeugmaschine zum Fertigen eines ein wälzbares Profil, insbesondere eine Verzahnung, aufweisenden Werkstücks ohne das Erfordernis weiterer, teurer Spezialmaschinen, z. B. Spezial-Wälzfräsmaschinen. Die erfindungsgemäße Wälzfräsvorrichtung kann hierbei, analog zu z. B. einer Vorsatzspindel, automatisch programmgesteuert in die Arbeitsspindel ein- und ausgewechselt und/oder automatisch verriegelt werden.

Der Antrieb des rotierenden Wälzfräswerkzeugs 310 zum Abtragen von material von dem Werkstück 100 zum Formen der Verzahnung 110 erfolgt erfindungsgemäß mittels einer Getriebeeinrichtung, angetrieben durch die Arbeitsspindel über ein gegebenenfalls in das Gehäuse der Wälzfräsvorrichtung 300 integriertes Winkelgetriebe.

Hierdurch wird eine Vorrichtung zum Bearbeiten eines in eine Werkzeugmaschine 200 eingespannten Werkstücks 100 durch Zerspanen zum Formen einer Verzahnung 110 auf dem Werkstück 100 durch Wälzfräsen bereitgestellt, wobei die Vorrichtung 300 mit dem Wälzfräswerkzeug 310 in der zumindest 5 Achsen umfassenden Werkzeugmaschine über zumindest 3 lineare und zumindest 2 rotatorische Achsen der Werkzeugmaschine in jede erforderliche, gewünschte Position und/oder Orientierung relativ zu dem Werkstück, insbesondere einem Zahnrad wie einem Stirnzahnrad oder Kegelzahnrad, gebracht werden kann.

## Patentansprüche

1. Vorrichtung zum Bearbeiten eines an einer zumindest 5 Achsen aufweisenden Werkzeugmaschine (200) eingespannten Werkstücks (100) durch Zerspanen mit:
- einem Wälzwerkzeug (310) zum Abtragen von Material des Werkstücks (100) zum Formen eines wälzbaren Profils, insbesondere einer Verzahnung (110), auf dem Werkstück (100) durch Wälzfräsen,
- einem Wälzwerkzeug-Aufnahmemittel (320) zum Aufnehmen des Wälzwerkzeugs (310), und
- einem Fräskopf-Befestigungsmittel (330), dass dazu geeignet ist, die Vorrichtung (300) an der Werkzeugmaschine (200) zu befestigen,
**dadurch gekennzeichnet, dass**
das Fräskopf-Befestigungsmittel (330) dazu geeignet ist, die Vorrichtung (300) durch Verriegeln in einem Aufnahmemittel (211) eines Fräskopfes (210) der Werkzeugmaschine (200) zu befestigen, derart, dass die Vorrichtung (300) dazu geeignet ist, an dem Aufnahmemittel (211) des Fräskopfes (210) der Werkzeugmaschine (200) eingewechselt und verriegelt zu werden, und durch Entriegeln aus der verriegelten Befestigung in dem Aufnahmemittel (211) des Fräskopfes (210) der Werkzeugmaschine (200) zu lösen, derart, dass die Vorrichtung dazu geeignet ist, an dem Aufnahmemittel (211) des Fräskopfes (210) der Werkzeugmaschine (200 entriegelt und ausgewechselt zu werden.

2. Vorrichtung nach Anspruch 1, weiterhin **gekennzeichnet durch**
- eine Getriebeeinrichtung, die dazu geeignet das Wälzwerkzeug (310) anzutreiben, indem eine Rotationsbewegung von einer Arbeitsspindel (220) der Werkzeugmaschine (200) über die Getriebeeinrichtung auf das Wälzwerkzeug (310) übertragen wird, wenn die Vorrichtung (300) in dem Aufnahmemittel (211) des Fräskopfs (210) befestigt ist.

3. Vorrichtung nach Anspruch 2, **dadurch gekennzeichnet, dass**
die Getriebeeinrichtung ein Winkelgetriebe und/oder einen einen Dorn umfassenden Gegenhalter umfasst.

4. Vorrichtung nach einem der Ansprüche 1 bis 3, **dadurch gekennzeichnet, dass**
die Werkzeugmaschine (200) eine CNC-Werkzeugmaschine ist, die dazu geeignet ist, das Wälzwerkzeug (210) programmgesteuert simultan in 5 Bewegungsfreiheitsgraden relativ zu dem in der Werkzeugmaschine (200) eingespannten Werkstück (100) zu bewegen, wenn die Vorrichtung (300) in dem Aufnahmemittel (211) des Fräskopfes (210) der Werkzeugmaschine (200) befestigt ist.

5. Vorrichtung nach einem der Ansprüche 1 bis 4, **dadurch gekennzeichnet, dass**
die Vorrichtung (300) dazu geeignet ist, zum Befestigen in dem Aufnahmemittel (211) des Fräskopfes (210) automatisch in das Aufnahmemittel (211) des Fräskopfes (210) eingebracht zu werden.

6. Vorrichtung nach Anspruch 5, **dadurch gekennzeichnet, dass** die Vorrichtung (300) dazu geeignet ist, in einem Magazin der Werkzeugmaschine (200) aufbewahrt zu werden, bis die Vorrichtung (300) in dem Aufnahmemittel (211) des Fräskopfes (210) befestigt wird.

7. Vorrichtung nach einem der Ansprüche 1 bis 6, **dadurch gekennzeichnet, dass**
das Wälzwerkzeug-Aufnahmemittel (320) dazu geeignet ist, dass ein erstes in dem Wälzwerkzeug-Aufnahmemittel (320) aufgenommenes Wälzwerkzeug (310) zum Auswechseln mit einem zweiten Wälzwerkzeug automatisch ein- und ausgewechselt werden kann.

8. Werkzeugmaschine zum Bearbeiten eines in die Werkzeugmaschine (200) eingespannten Werkstücks (100) durch Zerspanen, wobei die Werkzeugmaschine (200) zumindest 5 Achsen umfasst, mit:
- einem Fräskopf (210) mit einem Aufnahmemittel (211) zum Aufnehmen von Werkzeugen und/oder zum Aufnehmen von ein Werkzeug umfassenden Werkzeug-Vorrichtungen, und
- einer Arbeitsspindel (220) zum Antreiben eines in dem Aufnahmemittel (211) des Fräskopfes (210) aufgenommenen Werkzeugs,
**dadurch gekennzeichnet, dass**
die Werkzeugmaschine (200) mit einer Vorrichtung (300) nach einem der Ansprüche 1 bis 7 ausgerüstet ist und dazu eingerichtet ist, die Vorrichtung (300) durch Verriegeln in dem Aufnahmemittel (211) des Fräskopfes (210) der Werkzeugmaschine (200) zu befestigen, derart, dass die Vorrichtung (300) an dem Aufnahmemittel (211) des Fräskopfes (210) der Werkzeugmaschine (200) eingewechselt und verriegelt wird, und durch Entriegeln aus der verriegelten Befestigung in dem Aufnahmemittel (211) des Fräskopfes (210) der Werkzeugmaschine (200) zu lösen, derart, dass die Vorrichtung an dem Aufnahmemittel (211) des Fräskopfes (210) der Werkzeugmaschine (200 entriegelt und ausgewechselt wird.

9. Werkzeugmaschine nach Anspruch 8, die dazu geeignet ist, die Vorrichtung (300) nach einem der Ansprüche 1 bis 7 automatisch an dem Aufnahmemittel (211) des Fräskopfes (210) zu befestigen.

10. Werkzeugmaschine nach Anspruch 8 oder 9, die dazu geeignet ist, die Vorrichtung (300) automatisch mit einer ein Werkzeug umfassenden, in dem Aufnahmemittel (211) des Fräskopfes (210) aufgenommenen Werkzeug-Vorrichtung auszuwechseln.

11. Werkzeugmaschine nach einem der Ansprüche 8 bis 10, **dadurch gekennzeichnet, dass** die Werkzeugmaschine (200) ein Magazin umfasst, dass dazu geeignet ist eine Vorrichtung (300) nach zumindest einem der Ansprüche 1 bis 7 aufzunehmen, bis die Vorrichtung (300) in dem Aufnahmemittel (211) des Fräskopfes (210) befestigt wird, und/oder ein oder mehrere Wälzwerkzeuge (310) aufzunehmen.

12. Werkzeugmaschine nach einem der Ansprüche 8 bis 11, **dadurch gekennzeichnet, dass** die Werkzeugmaschine (200) dazu geeignet ist automatisch ein erstes Wälzwerkzeug (310), dass in dem Wälzwerkzeug-Aufnahmemittel (320) aufgenommen ist, mit einem zweiten Wälzwerkzeug auszuwechseln.

13. Verfahren zum Fertigen eines eine Verzahnung aufweisenden Werkstücks (100) durch Wälzfräsen, **dadurch gekennzeichnet, dass** das Werkstück (100) an einer zumindest 5 Achsen umfassenden Werkzeugmaschine (200) nach einem der Ansprüche 8 bis 12 zum Formen des wälzbaren Profils, insbesondere der Verzahnung (110), des Werkstücks (100) mittels einer Vorrichtung nach einem der Ansprüche 1 bis 7 bearbeitet wird.

## Claims

1. A device for processing a workpiece (100) clamped in a machine tool (200) comprising at least 5 axes by machining, said device comprising:
- a hobbing tool (310) for removing material of said workpiece (100) for shaping a rollable profile, in particular a gearing, on said workpiece (100) by hobbing,
- a hobbing tool receiving means (320) for receiving said hobbing toal (310), and
- a milling head fixing means (330) adapted to fix said device (300) to said machine tool (200),
**characterized in that**
said milling head fixing means (330) are adapted to fix said device (300) by locking in said receiving means (211) of a milling head (210) of said machine tool (200) such that said device (300) is adapted to be inserted and locked at said receiving means (211) of said milling head (210) of said machine tool (200), and to release said device by unlocking from the fixing in said receiving means (211) of said milling head (210) of said machine tool (200) such that said device is adapted to be unblocked and replaced at said receiving means (211) of said milling head (210) of said machine tool (200).

2. The device according to claim 1, further **characterized by**
- a gear unit which is adapted to drive said hobbing tool (310) by transferring a rotational movement from a work spindle (220) of said machine tool (200) to said hobbling tool (310) via said gear unit if the device is fixed in said receiving means (211) of said milling head (210).

3. The device according to claim 2, **characterized in that** said gear unit comprises an angular gear and/or a counter support comprising a pin.

4. The device according to any one of the claims 1 to 3, **characterized in that**
said machine tool (200) is a CNC machine tool adapted to move said hobbling tool (210) by program control simultaneously in 5 degrees of freedom of movement relative to said workpiece (100) clamped in said machine tool (200) if said device is fixed in said receiving means (211) of said milling head (210) of said machine tool (200).

5. The device according to any one of the claims 1 to 4, **characterized in that**
said device (300) is adapted to be automatically inserted into said receiving means (211) of said milling head (210) for fixing in said receiving means (211) of said milling head (210)

6. The device according to claim 5, **characterized in that** said device (300) is adapted to be stored in a magazine of said machine tool (200) until said device (300) is fixed in said receiving means (211) of said milling head (210).

7. The device according to any one of the claims 1 to 6, **characterized in that**
said hobbing tool receiving means (320) is adapted such that a first hobbing tool (310) received in said hobbing tool receiving means (320) can be automatically exchanged with and replaced by a second hobbing tool for replacement.

8. A machine tool for processing a workpiece (100) clamped in said machine tool (200) by machining, said machine tool (200) comprising at least 5 axes, comprising:
- a milling head (210) having a receiving means (211) for receiving tools and/or for receiving tool devices comprising a tool, and
- a work spindle (220) for driving a tool received in said receiving means (211) of said milling head (210),
**characterized in that**
said machine tool (200) is equipped with a device (300) according to any one of claims 1 to 7 and is adapted to fix said device (300) by locking in said receiving means (211) of a milling head (210) of said machine tool (200) such that said device (300) is adapted to be inserted and locked at said receiving means (211) of said milling head (210) of said machine tool (200), and to release said device by unlocking from the fixing in said receiving means (211) of said milling head (210) of said machine tool (200) such that said device is adapted to be unlocked and replaced at said receiving means (211) of said milling head (210) of said machine tool (200).

9. The machine tool according to claim 8, which is adapted to automatically fix said device (300) according to at least one of claims 1 to 7 to said receiving means (211) of said milling head (210).

10. The machine tool according to claim 8 or 9, which is adapted to automatically replace said device (300) with a tool device, which comprises a tool and is received in said receiving means (211) of said milling head (210).

11. The machine tool according to any one of the claims 8 to 10, **characterized in that** said machine tool (200) comprises a magazine adapted to accommodate said device (300) according to at least one of claims 1 to 7 until said device (300) is fixed in said receiving means (211) of said milling head (210) and/or to accommodate one or a plurality of hobbing tools (310).

12. The machine tool according to any of the claims 8 to 11, **characterized in that** said machine tool (200) is adapted to automatically exchange a first hobbling tool (310) received in said hobbing tool receiving means (320) with a second hobbling tool.

13. A method for manufacturing a workpiece having a gearing (100) by hobbing, **characterized in that** said workpiece (100) is machined on a machine tool (200) comprising at least 5 axes according to any one of claims 8 to 12 for shaping said rollable profile, in particular said gearing (110), of said work piece (100) by means of said device according to any one of claims 1 to 7.

## Revendications

1. Dispositif pour usiner par enlèvement de matière une pièce (100) serrée dans une machine-outil (200) comprenant au moins cinq axes, comportant
- un outil de taille en développante (310) destiné à enlever de la matière de la pièce à usiner (100) en vue de former un profil taillable, en particulier une denture (110), sur la pièce à usiner (100) par taille en développante,
- un moyen de logement d'outil de taille en développante (320) destiné à loger l'outil de taille en développante (310), et
- un moyen de fixation de la tête de fraisage (330) apte à fixer le dispositif (300) sur la machine-outil (200),
**caractérisé en ce que**
le moyen de fixation de tête de fraisage (330) est apte à fixer le dispositif (300) par verrouillage dans un moyen de logement (211) de la tête de fraisage (210) de la machine-outil (200), de telle sorte que le dispositif (300) est apte à être chargé et être verrouillé sur le moyen de logement (211) de la tête de fraisage (210) de la machine-outil (200),
et à le détacher par déverrouillage hors de la fixation verrouillée dans le moyen de logement (211) de la tête de fraisage (210) de la machine-outil (200), de telle sorte que le dispositif est apte à être déverrouillé et à être remplacé sur le moyen de logement (211) de la tête de fraisage (210) de la machine-outil (200).

2. Dispositif selon la revendication 1, **caractérisé en outre par**
- un mécanisme de transmission qui est apte à entraîner l'outil de taille en développante (310) en transmettant un mouvement de rotation d'une broche de travail (220) de la machine-outil (200) à l'outil de taille en développante (310) par le mécanisme de transmission lorsque le dispositif (300) est fixé dans le moyen de logement (211) de la tête de fraisage (210).

3. Dispositif selon la revendication 2, **caractérisé en ce que** le mécanisme de transmission comprend un engrenage angulaire et/ou un contre-support pourvu d'un mandrin.

4. Dispositif selon l'une des revendications 1 à 3, **caractérisé en ce que** la machine-outil (200) est une machine-outil à commande numérique apte à déplacer l'outil de taille en développante (210) par commande par programme simultanément dans 5 degrés de liberté de mouvement par rapport à la pièce (100) serrée dans la machine-outil (200) lorsque le dispositif (300) est fixé dans le moyen de logement (211) de la tête de fraisage (210) de la machine-outil (200).

5. Dispositif selon l'une des revendications 1 à 4, **caractérisé en ce que** pour la fixation dans le moyen de logement (211) de la tête de fraisage (210), le dispositif (300) est apte à être inséré automatiquement dans le moyen de logement (211) de la tête de fraisage (210).

6. Dispositif selon la revendication 5, **caractérisé en ce que** le dispositif (300) est apte à être conservé dans un magasin de la machine-outil (200) jusqu'à ce que le dispositif (300) soit fixé dans le moyen de logement (211) de la tête de fraisage (210).

7. Dispositif selon l'une des revendications 1 à 6, **caractérisé en ce que** le moyen de logement (320) de l'outil de taille en développante est apte à permettre de charger et de remplacer automatiquement un premier outil de taille en développante (310), logé dans le moyen de logement (320) de l'outil de taille en développante, en vue de le remplacer par un second outil de taille en développante.

8. Machine-outil destinée à usiner par enlèvement de matière une pièce à usiner (100) serrée dans la machine-outil (200), la machine-outil (200) comprenant au moins 5 axes, comportant :
- une tête de fraisage (210) pourvue d'un moyen de logement (211) destiné à loger des outils et/ou à loger des dispositifs à outil comprenant un outil, et
- une broche de travail (220) destinée à entraîner un outil logé dans le moyen de logement (211) de la tête de fraisage,
**caractérisée en ce que**
la machine-outil (200) est munie d'un dispositif (300) selon l'une des revendications 1 à 7 et est adaptée à fixer le dispositif (300) par verrouillage dans le moyen de logement (211) de la tête de fraisage (210) de la machine-outil (200), de telle sorte que le dispositif (300) est chargé et verrouillé sur le moyen de logement (211) de la tête de fraisage (210) de la machine-outil (200), et à le détacher par déverrouillage hors de la fixation verrouillée dans le moyen de logement (211) de la tête de fraisage (210) de la machine-outil (200), de telle sorte que le dispositif est déverrouillé et remplacé sur le moyen de logement (211) de la tête de fraisage (210) de la machine-outil (200).

9. Machine-outil selon la revendication 8, qui est apte à fixer le dispositif (300) selon l'une des revendications 1 à 7 automatiquement sur le moyen de logement (211) de la tête de fraisage (210).

10. Machine-outil selon la revendication 8 ou 9, qui est apte à remplacer le dispositif (300) automatiquement par un dispositif à outil comprenant un outil et logé dans le moyen de logement (211) de la tête de fraisage (210).

11. Machine-outil selon l'une des revendications 8 à 10, **caractérisée en ce que** la machine-outil (200) comprend un magasin qui est apte à loger un dispositif (300) selon l'une au moins des revendications 1 à 7 jusqu'à ce que le dispositif (300) soit fixé dans le moyen de logement (211) de la tête de fraisage (210), et/ou à loger un ou plusieurs outils de taille en développante (310).

12. Machine-outil selon l'une des revendications 8 à 11, **caractérisée en ce que** la machine-outil (200) est apte à remplacer automatiquement un premier outil de taille en développante (310), logé dans le moyen de logement (320) de l'outil de taille en développante, par un second outil de taille en développante.

13. Procédé de fabrication par taille en développante d'une pièce à usiner (100) présentant une denture, **caractérisé en ce que** l'on usine la pièce (100) sur une machine-outil comprenant au moins 5 axes selon l'une des revendications 8 à 12 pour former un profil taillable, en particulier la denture (110) de la pièce à usiner (100), à l'aide d'un dispositif selon l'une des revendications 1 à 7.
